# EUROPEAN PATENT APPLICATION

(11) **EP 4 534 271 A1**
(43) Date of publication of application: **09.04.2025**
(21) Application number: 23815817.4
(22) Date of filing: 18.05.2023
(51) Int. Cl.: B29C 45/13, B29C 45/16, B29C 45/54

(54) **INJECTION MOLDING DEVICE**

(30) Priority: 03.06.2022 JP 2022090767
(71) Applicant: Suntory Holdings Limited, Osaka-shi, Osaka 530-8203 (JP)
(72) Inventor: KOBAYASHI, Toshiya, Tokyo 135-8631 (JP); TAKANO, Riki, Tokyo 135-8631 (JP); AKIYAMA, Takashi, Tokyo 135-8631 (JP)
(74) Representative: Vossius & Partner Patentanwälte Rechtsanwälte mbB
(86) International application number: PCT/JP2023/018624
(87) International publication number: WO 2023/234058

(57) **Abstract**

An injection molding device includes a first injection section (22), a second injection section (24), a mold mounting unit (28) and a hot runner (26), where a posture in which a first plasticizing device (32) and a first plunger (34) are in fluid communication and a posture in which the first plunger (34) and the hot runner (26) are in fluid communication can be selected as a posture of a first distributor (60), a posture in which a second plasticizing device (38) and a second plunger (40) are in fluid communication and a posture in which the second plunger (40) and the hot runner (26) are in fluid communication can be selected as a posture of a second distributor (64), and the hot runner (26) includes a first sprue runner (44), a second sprue runner (46), and a nozzle (42), the nozzle (42) being in fluid communication with both sprue runners and can be in fluid communication with the mold (M).

## Description

### Technical Field

The present application relates to an injection molding device.

### Background Art

From the standpoint of reducing the environmental load, there is a growing need to reuse recycled plastic containers. Patent Document 1 discloses a preform manufacturing device that includes a decontamination machine that removes contaminants in thermoplastic resin flakes generated from a used plastic container, and an injection molding machine that performs injection molding of a thermoplastic resin supplied from the decontamination machine and manufactures a preform from the thermoplastic resin flakes.

Since recycled materials are derived from used materials which are different from each other in various conditions (application, shape, processing conditions, etc.) relating to their origins, variations in quality may be recognized as compared with virgin materials manufactured under uniform manufacturing conditions. Therefore, in order to manufacture a plastic container using a recycled material, it is necessary to take measures such as absorbing variations in quality on the raw material side by adjusting manufacturing conditions.

As an example of such measures, it has been studied to manufacture plastic containers using recycled materials and virgin materials or the like in combination to ensure a predetermined quality. For example, Patent Document 1 discloses a device for manufacturing a preform using a virgin material alone, a recycled material alone, or a mixture of a virgin material and a recycled material as a material.

### Citation List

### Patent Literature

Patent Document 1: JP 2019-514728 T (or US 2019/126512 A)

### Summary of Invention

### Technical Problem

In order to use the mixture of the virgin material and the recycled material in the device of Patent Document 1, it is necessary to mix the virgin material and the recycled material in advance and then supply the mixture to the device. Therefore, it is difficult to change the ratio between the virgin material and the recycled material during the manufacturing of the preform, and there is a possibility that the variation in the quality of the recycled material cannot be absorbed.

Therefore, in supplying a plurality of types of materials to a mold, it is necessary to realize an injection molding device that can easily adjust supply conditions such as a supply order and a supply ratio.

### Solution to Problem

A first injection molding device according to the present invention includes a first injection section including a first plasticizing device, a first plunger, and a first distributor connected to the first plasticizing device and the first plunger, a second injection section including a second plasticizing device, a second plunger, and a second distributor connected to the second plasticizing device and the second plunger;
a mold mounting unit, and a hot runner in fluid communication with the first injection section and the second injection section, wherein a posture in which the first plasticizing device and the first plunger are in fluid communication and a posture in which the first plunger and the hot runner are in fluid communication are selectable as a posture of the first distributor, a posture in which the second plasticizing device and the second plunger are in fluid communication and a posture in which the second plunger and the hot runner are in fluid communication are selectable as a posture of the second distributor, the hot runner includes a first sprue runner, a second sprue runner, and a nozzle; and the nozzle is provided in fluid communication with the first sprue runner and the second sprue runner, and in fluid communication with a mold mounted on the mold mounting unit.

A second injection molding device according to the present invention includes an injection section including a first plasticizing device, a second plasticizing device, a plunger, and a distributor, a mold mounting unit, and a hot runner in fluid communication with the injection section, wherein a posture in which the first plasticizing device and the plunger are in fluid communication, a posture in which the second plasticizing device and the plunger are in fluid communication, and a posture in which the plunger and the hot runner are in fluid communication are selectable as a posture of the distributor, the hot runner includes a first sprue runner, a second sprue runner, and a nozzle, and the nozzle is provided in fluid communication with the first sprue runner and the second sprue runner, and in fluid communication with a mold mounted on the mold mounting unit.

According to these configurations, supply conditions such as a supply order and a supply ratio can be adjusted when supplying the first material supplied through the first plasticizing device and the second material supplied through the second plasticizing device to the mold. As a result, the quality of the obtained molded body is easily stabilized.

Preferred aspects of the present invention will be described below. However, the scope of the present invention is not limited by the preferred aspects described below.

Preferably, as one aspect, in the injection molding device according to the present invention, the first distributor and the second distributor are connected to each other, and a posture in which the first plunger is in fluid communication with at least one of the second plasticizing device and the second plunger is selectable as the postures of the first distributor and the second distributor.

According to this configuration, since the first material supplied through the first plasticizing device and the second material supplied through the second plasticizing device can be mixed in the first plunger, the physical properties of the material can be easily adjusted.

As one aspect, the injection molding device according to the present invention further preferably includes a control device configured to control operations of the first plunger and the second plunger.

According to this configuration, it is easy to control the ratio of the first material and the second material to be supplied to the mold.

Preferably, as one aspect, the injection molding device according to the present invention further preferably includes a first flow meter provided in a flow path between the first distributor and the hot runner; and a second flow meter provided in a flow path between the second distributor and the hot runner; wherein the control device is configured to control operations of the first plunger and the second plunger in accordance with an instruction value of the first flow meter and an instruction value of the second flow meter.

According to this configuration, it is easy to perform control reflecting the operation state of the injection molding device.

Preferably, as one aspect, the injection molding device according to the present invention further includes a first displacement gauge configured to detect a displacement of the plunger of the first piston and a second displacement gauge configured to detect a displacement of the plunger of the second piston, and the control device is preferably capable of controlling operations of the first plunger and the second plunger in accordance with an instruction value of the first displacement gauge and an instruction value of the second displacement gauge.

According to this configuration, it is easy to perform control reflecting the operation state of the injection molding device.

In the injection molding device according to the present invention, as one aspect, the hot runner preferably includes a stem configured to open and close the nozzle, and an adjustment device configured to adjust a position of the stem.

According to this configuration, it is easy to control the order, timing, ratio, and the like at which the first material and the second material are supplied to the mold.

Preferably, in the injection molding device according to the present invention, as one aspect, the adjustment device preferably includes a servomotor and is configured to adjust the position of the stem in accordance with a rotational speed of the servomotor.

According to this configuration, it is easy to finely adjust the order, timing, ratio, and the like at which the first material and the second material are supplied to the mold.

Preferably, as one aspect, in the injection molding device according to the present invention, the adjustment device includes a magnetic displacement gauge and a hydraulic device configured to move the stem, and the hydraulic device is controlled in accordance with an instruction value of the magnetic displacement gauge.

According to this configuration, it is easy to finely adjust the order, timing, ratio, and the like at which the first material and the second material are supplied to the mold.

Preferably, as one aspect, the injection molding device according to the present invention further includes a third distributor provided between the hot runner and each of the first injection section and the second injection section, wherein as a posture of the third distributor, a posture in which the first injection section and the first sprue runner are in fluid communication and the second injection section and the second sprue runner are in fluid communication, and a posture in which the first injection section and the second sprue runner are in fluid communication, and the second injection section and the first sprue runner are in fluid communication are selectable.

According to this configuration, the material to be supplied to the first sprue runner and second sprue runner can be arbitrarily selected.

As one aspect, the injection molding device according to the present invention further preferably includes a stationary mixer provided in a flow path between the first plunger and the hot runner.

According to this configuration, the material supplied from the first plunger to the hot runner can be easily made to a uniform state.

As one aspect, the injection molding device according to the present invention further preferably includes a third plasticizing device, and a posture in which the third plasticizing device and the first plunger are in fluid communication is further selectable as the posture of the first distributor.

According to this configuration, since the first material supplied through the first plasticizing device and the third material supplied through the third plasticizing device can be mixed in the first plunger, the physical properties of the material can be easily adjusted.

As one aspect, the injection molding device according to the present invention is preferably provided with a raw material supply unit configured to supply a resin in a molten state to the first plasticizing device.

According to this configuration, the material subjected to pre-treatment in the molten state can be supplied to the first plasticizing device.

Preferably, as one aspect, in the injection molding device according to the present invention, the raw material supply unit includes an extruder configured to melt and extrude a recycled material and a decontamination machine configured to remove a foreign matter contained in the recycled material.

According to this configuration, the decontamination treated recycled material can be used as the first material to be supplied through the first plasticizing device.

As one aspect, in the injection molding device according to the present invention, a flake-like recycled material can be preferably used as the recycled material.

According to this configuration, the step of pelletizing the recycled material can be omitted.

Further features and advantages of the present invention will become more apparent from the following description of exemplary and non-limiting embodiments with reference to the drawings.

### Brief Description of Drawings

FIG. 1 illustrates a preform for a plastic container.
FIG. 2 is a schematic view of a pre-treatment unit according to a first embodiment.
FIG. 3 is a schematic view of an injection molding device according to the first embodiment.
FIG. 4(a) illustrates a perspective view of the first distributor, FIG. 4(b) illustrates a cross-sectional view taken along line b-b of FIG. 4(a), FIG. 4(c) illustrates a cross-sectional view taken along line c-c of FIG. 4(a), and FIG. 4(d) illustrates a cross-sectional view taken along line d-d of FIG. 4(a).
FIG. 5 illustrates a perspective view of a third distributor.
FIG. 6(a) is an exploded perspective view of a hot runner, and FIG. 6(b) is a schematic view for explaining a relationship between a stem and a control plate.
FIG. 7(a) is a perspective view of a stationary mixer, and FIG. 7(b) is a cross-sectional view taken along plane b-b of FIG. 7(a).
FIG. 8(a) illustrates injection of a first resin of a first preform according to the present embodiment, FIG. 8(b) illustrates injection of a next resin, FIG. 8(c) illustrates a molded first preform, and FIG. 8(d) illustrates a plastic bottle manufactured from the first preform.
FIG. 9(a) illustrates injection of a first resin related to a second preform, FIG. 9(b) illustrates injection of a next resin, FIG. 9(c) illustrates a molded second preform, and FIG. 9(d) illustrates a plastic bottle manufactured from the second preform.
FIG. 10(a) illustrates injection of a first resin related to third and fourth preforms, FIG. 10(b) illustrates injection of a next resin, FIG. 10(c) illustrates a molded third preform, FIG. 10(d) illustrates a plastic bottle manufactured from the third preform, FIG. 10(e) illustrates a molded fourth preform, and FIG. 10(f) illustrates a plastic bottle manufactured from the fourth preform.
FIG. 11(a) illustrates a modified example of the third preform, FIG. 11(b) illustrates a plastic bottle manufactured from the modified example of the third preform, FIG. 11(c) illustrates a modified example of the fourth preform, and FIG. 11(d) illustrates a plastic bottle manufactured from the modified example of the fourth preform.
FIG. 12(a) illustrates injection of a first resin related to a fifth preform, FIG. 12(b) illustrates injection of a next resin, FIG. 12(c) illustrates a molded fifth preform, and FIG. 12(d) illustrates a plastic bottle manufactured from the fifth preform.
FIG. 13(a) is a perspective view of a third distributor according to a modified example, FIG. 13(b) is a cross-sectional view taken along line b-b of FIG. 13(a), FIG. 13(c) is a cross-sectional view taken along line c-c of FIG. 13(a), FIG. 13(d) is a cross-sectional view taken along line d-d of FIG. 13(a), and FIG. 13(e) is a cross-sectional view taken along line e-e of FIG. 13(a).
FIG. 14(a) is an exploded perspective view of a hot runner according to a modified example, and FIG. 14(b) is a schematic view for explaining a relationship between a stem, a control plate, and an oil plate.
FIG. 15 is a schematic view of an injection molding device according to another embodiment.
FIG. 16 is a schematic view of an injection molding device according to another embodiment.

### Description of Embodiments

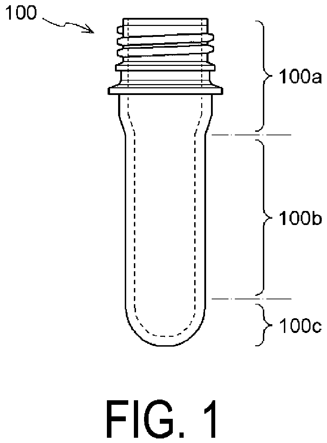

An embodiment of an injection molding device according to the present invention will be described with reference to the drawings. Hereinafter, an example in which the injection molding device according to the present invention is applied to a manufacturing system 10 (an example of an injection molding device) that manufactures a preform 100 (FIG. 1) to be used for manufacturing of plastic bottles will be described. Note that the same or corresponding elements are denoted by the same reference numerals, and redundant description will be omitted. In order to facilitate understanding, the scale of the drawings may be changed.

### Configuration of Manufacturing System

FIG. 1 illustrates a preform 100 for a plastic container. Here, the plastic container is a plastic bottle which is mainly used to accommodate beverages, foods, and the like, and is made of polyethylene terephthalate (PET). The plastic container is not limited thereto, and may be made of plastic such as polypropylene (PP) or polyethylene (PE). The plastic container may also be polyethylene naphthalate (PEN), in particular a plant bottle made from a plant or the like.

The preform 100 has a shape like a test tube including a mouth portion 100a fitted with a cap of a plastic container, a cylindrical body portion 100b formed in continuation with the mouth portion 100a, and a bottom portion 100c that closes one end portion of the cylindrical body portion. One end portion of the mouth portion 100a is opened, and the outer peripheral surface thereof is formed with a male screw to be screwed with a female screw formed on the cap of the plastic container. The plastic container is molded by expanding a test tube-shaped preform 100 by stretch blow molding.

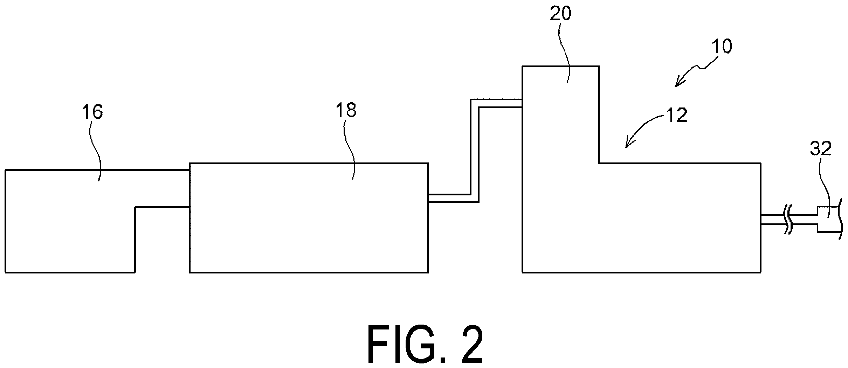

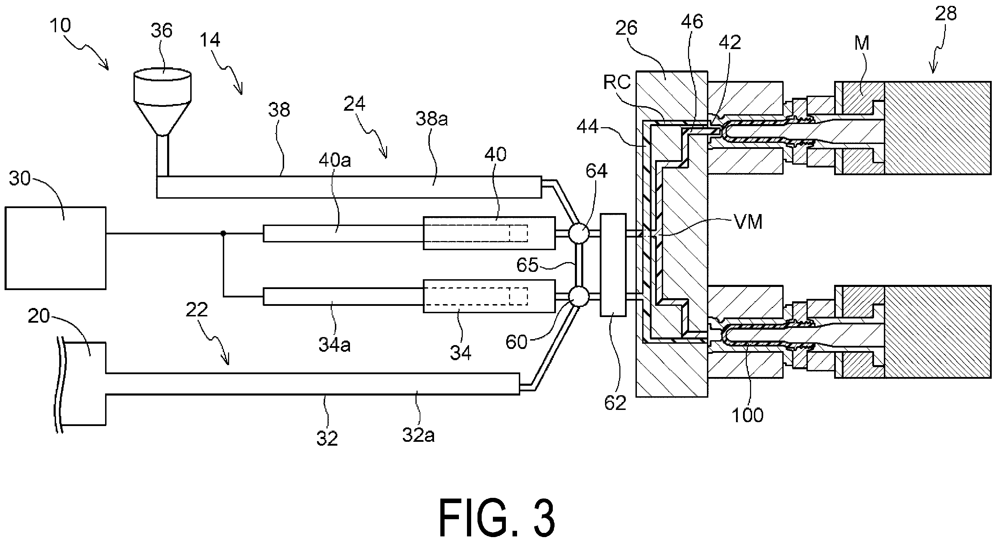

FIGS. 2 and 3 show schematic views of a manufacturing system 10. As shown in FIG. 2, the manufacturing system 10 includes a pre-treatment unit 12 for pre-treatment a recycled material RC as a first molten material, and a molding machine 14 as shown in FIG. 3. The preform 100 is generally manufactured using the molding machine 14 by using a virgin material VM serving as a second molten material containing petroleum or the like as a raw material, a recycled material RC containing used plastic container as a raw material, or a composite material such as a mixture of the virgin material VM and the recycled material RC as a raw material. Since the used plastic container may be contaminated with impurities, the recycled material RC is charged into the molding machine 14 after the impurities are removed in advance by the pre-treatment unit 12. In the following description, the composite material is described as the virgin material VM and the recycled material RC, but no such limitation is intended, and for example, a plastic container may be manufactured by a composite material of a petroleum-derived plastic material and a bioplastic material.

Note that, instead of the virgin material VM, a recycled material, such as bioplastic or chemical recycled plastic, from which a material having a relatively stable quality can be easily obtained, may be used. Since the virgin material VM or an alternative material is supplied to a second plasticizing device 38 via a hopper 36 as will be described later, it is preferable that a material is in a form suitable for supply from the hopper 36 such as a pellet form or a powder form. Regarding the chemical recycled plastics and the like exemplified above, commercially available products in pellet form or powder form are available, and the material can be pelletized or powdered through a known method.

The pre-treatment unit 12 serving as an example of a raw material supply unit includes a dryer 16, an extruder 18, and a decontamination machine 20. The recycled material RC is a thermoplastic resin flake serving as an example of a flake-like recycled material, for example, a PET flake obtained by washing and then pulverizing a used PET bottle (a washing machine and a pulverizer are not shown). Here, the PET flakes are assumed to be small pieces of about 8 mm square. The recycled material RC is charged into a tank of the dryer 16, dried in the dryer 16, and then supplied to the extruder 18.

The recycled material RC dried in the dryer 16 is sent to the extruder 18 and heated while being stirred. Therefore, the recycled material RC is melted and plasticized. Note that in addition to the recycled material RC, the virgin material VM may be supplied to the extruder 18. In this case, the supply position of the virgin agent VM may be the dryer 16 or the extruder 18.

The recycled material RC plasticized in the extruder 18 is sent to the decontamination machine 20. The decontamination machine 20 interiorly includes a decontamination container connected to a vacuum pump, and can volatilize contaminants in the recycled material RC, that is, in the thermoplastic resin by heating the recycled material RC charged into the decontamination container under vacuum. Thus, contaminants in the recycled material RC can be removed. Note that both the vacuum pump and the decontamination container are not illustrated.

The decontaminated recycled material RC is supplied to a molding machine 14. As illustrated in FIG. 3, the molding machine 14 includes a first injection section 22, a second injection section 24, a hot runner 26, a mold mounting unit 28, and a control device 30. Note that a mold M is mounted on the mold mounting unit 28. Furthermore, the mold M is provided with a plurality of cavities in correspondence with the shape of a preform 100, and a plurality of preforms 100 can be manufactured by one injection molding.

The first injection section 22 includes a first plasticizing device 32, a first plunger 34, and a first distributor 60. The first plasticizing device 32 has a screw (not shown) extending in the longitudinal direction inside a housing 32a thereof, and is heated by a heater. The thermoplastic resin of the recycled material RC supplied from the decontamination machine 20 is supplied in a molten state to the inside of the first plasticizing device 32, and is stirred in a heated state, so that a plasticized state can be maintained.

A distal end portion of the first plasticizing device 32 is coupled with the first plunger 34 by way of the first distributor 60. The first plunger 34 has, on the inner side, a first piston 34a configured to be slidable along the longitudinal direction of the first plunger 34. The recycled material RC in the first plasticizing device 32 is sucked up into the first plunger 34 by sliding the first piston 34a in the direction of pulling out from the first plunger 34. Furthermore, the recycled material RC sucked up into the first plunger 34 can be pressurized, that is, extruded toward the hot runner 26 by sliding the first piston 34a in a direction of pushing into the first plunger 34. The first plunger 34 is connected to the control device 30, and is configured to control the amount of recycled material RC to be extruded from the first plunger 34 by controlling the sliding, that is, the movement amount of the first plunger 34.

The first distributor 60 is coupled to the hot runner 26 by way of a third distributor 62 to be described later. Thus, the recycled material RC extruded by the first plunger 34 is configured to flow into the hot runner 26 through the third distributor 62.

The molding machine 14 includes the second injection section 24 for supplying the virgin material VM to the mold M installed in the mold mounting unit 28, and the second injection section 24 includes a hopper 36 into which the pellet-like virgin material VM is charged, a second plasticizing device 38, a second plunger 40, and a second distributor 64. The second plasticizing device 38 has a screw (not shown) extending in the longitudinal direction inside a housing 38a thereof, and is heated by a heater. The thermoplastic resin of the virgin material VM supplied in a pellet state from the hopper 36 is plasticized by being stirred in a heated state in the second plasticizing device 38.

A distal end portion of the second plasticizing device 38 is coupled with the second plunger 40 by way of the second distributor 64. The second plunger 40 has, on the inner side, a second piston 40a configured to be slidable along the longitudinal direction of the second plunger 40. The virgin material VM in the second plasticizing device 38 is sucked up into the second plunger 40 by sliding the second piston 40a in the direction of pulling out from the second plunger 40. The virgin material VM sucked up into the second plunger 40 can be pressurized, that is, extruded toward the hot runner 26 by sliding the second piston 40a in a direction of pushing into the second plunger 40. The second plunger 40 is connected to the control device 30, and is configured to control the amount of virgin material VM to be extruded from the second plunger 40 by controlling the sliding, that is, the movement amount of the second plunger 40.

The second distributor 64 is coupled to the hot runner 26 by way of a third distributor 62 to be described later. Thus, the virgin material VM extruded by the second plunger 40 is configured to flow into the hot runner 26 through the third distributor 62.

The first distributor 60 and the second distributor 64 are coupled to each other via piping 65, which allows the first plunger 34 and the second plunger 40 to be in fluid communication. Thus, the virgin material VM in the second plunger 40 can flow to the first plunger 34 via the second distributor 64, the piping 65, and the first distributor 60, and the recycled material RC supplied from the first plasticizing device 32 and the virgin material VM supplied from the second plasticizing device 38 via the second plunger 40 can be mixed. Conversely, the recycled material RC can also be supplied to the second plunger 40.

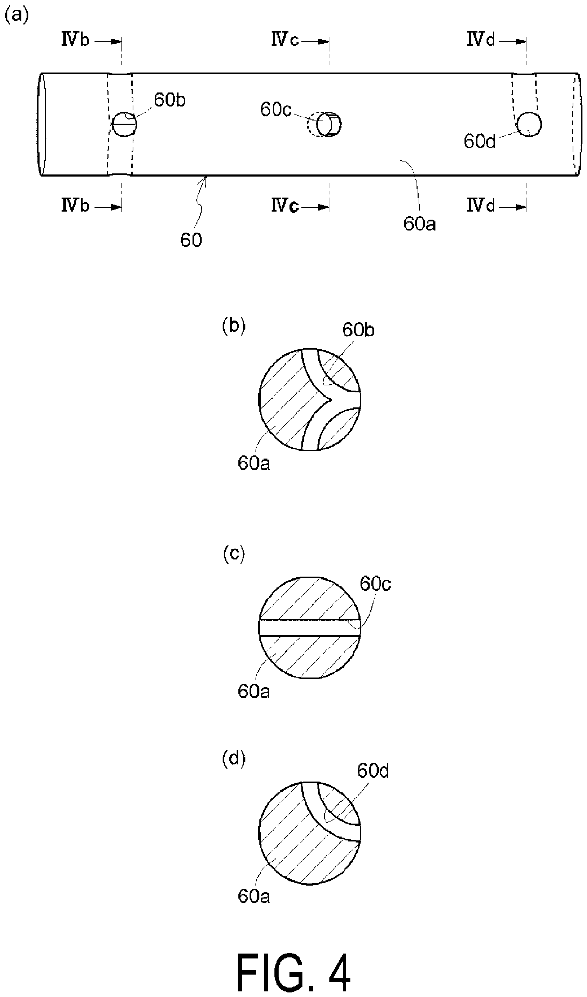

As illustrated in FIG. 4, the first distributor 60 has a shape in which a first flow path 60b, a second flow path 60c, and a third flow path 60d for circulating the recycled material RC and the virgin material VM are formed to be spaced apart from each other in the axial direction inside a cylindrical main body 60a. By sliding the main body 60a in the axial direction, the posture of any one of the first flow path 60b, the second flow path 60c, and the third flow path 60d can be changed to align with two or three of the first plasticizing device 32, the first plunger 34, the second distributor 64, and the third distributor 62 thereby achieving fluid communication according to the purpose. Since the shape and function of the second distributor 64 are similar to those of the first distributor 60, the description thereof will be omitted.

The first flow path 60b has openings on three sides separated by 90° in the cross section of the main body 60a, and these openings are directed to the first plasticizing device 32, the first plunger 34, and the second distributor 64, respectively, so that the three can be in fluid communication. At this time, when the posture in which the first distributor 60 and the second plunger 40 are in fluid communication is selected as the posture of the second distributor 64, the first plasticizing device 32, the first plunger 34, and the second plunger 40 are in fluid communication. In this state, the recycled material RC supplied from the first plasticizing device 32 and the virgin material VM supplied from the second plasticizing device 38 via the second plunger 40 can be guided to the first plunger 34.

The second flow path 60c has openings on two sides separated by 180° in the cross section of the main body 60a, and these openings are directed to the first plunger 34 and the hot runner 26, respectively, so that the two can be in fluid communication. However, in the present embodiment, since the third distributor 62 is provided between the first distributor 60 and the hot runner 26, the first distributor 60 and the third distributor 62 are in fluid communication. In this state, the material can be injected from the first plunger 34 to the hot runner 26.

The third flow path 60d has openings on two sides separated by 90° in the cross section of the main body 60a, and these openings are directed to the first plasticizing device 32 and the first plunger 34, respectively, so that the two can be in fluid communication. In this state, the recycled material RC supplied from the first plasticizing device 32 can be guided to the first plunger 34.

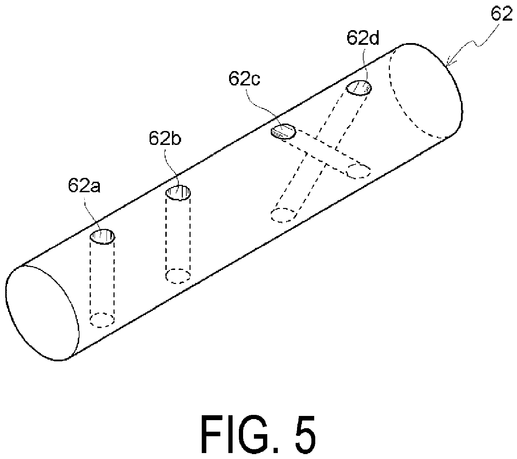

FIG. 5 is a perspective view of a third distributor 62. The third distributor 62 is formed in a circular column shape and is coupled to the first distributor 60 and the second distributor 64 by way of piping (see FIG. 3). The third distributor 62 is arranged such that its axial direction is orthogonal to the axial direction of the piping coupling the third distributor 62 and the first distributor 60 and the second distributor 64, that is, the direction in which the recycled material RC and the virgin material VM flow through the piping. Furthermore, the third distributor 62 is configured to be slidable along the axial direction thereof by a drive mechanism (not illustrated).

The third distributor 62 has through holes 62a, 62b, 62c, 62d formed so as to penetrate toward a side opposite to its radial direction. Specifically, a pair of through holes 62a and 62b formed to penetrate along the radial direction on one side in the axial direction and a pair of through holes 62c and 62d formed to penetrate so as to intersect in a side view on the other side are included. Here, the pair of through holes 62c and 62d are formed without being connected to each other inside. Therefore, the molten material passing through the through holes 62c and 62d is not mixed therein.

The third distributor 62 can switch between the through holes 62a, 62b, 62c, 62d coupled with the first distributor 60 and the second distributor 64 by sliding along the axial direction. Specifically, when coupled with a piping on one side of the third distributor 62, the through hole 62a and the first distributor 60 are connected to each other, and the through hole 62b and the second distributor 64 are connected to each other. Furthermore, when the third distributor 62 is slid and coupled on the other side, the through hole 62d and the first distributor 60 are connected to each other, and the through hole 62c and the second distributor 64 are connected to each other. By sliding the third distributor 62 in this way, it is possible to switch between the first distributor 60 and the second distributor 64, that is, the piping coupling the first injection section 22 and the second injection section 24 and the hot runner 26. Furthermore, by sliding the third distributor 62 to a position where the through holes 62a, 62b, 62c, and 62d and the piping are not connected, the recycled material RC and the virgin material VM flowing from the first injection section 22 and the second injection section 24 can be shielded.

The control of the operation of the first plunger 34 and the second plunger 40 by the control device 30 is performed in accordance with, for example, the flow rate of the material extruded from each plunger and the displacement of the piston of each plunger. In the former example, the operation of each of the first plunger 34 and the second plunger 40 is controlled in accordance with instruction values of a first flow meter (not illustrated) provided in the flow path between the first distributor 60 and the hot runner 26 and a second flow meter (not illustrated) provided in the flow path between the second distributor 64 and the hot runner 26. As a result, for example, the ratio of the material injected from each of the first plunger 34 and the second plunger 40 to the mold M, the mixing ratio when mixing the two types of materials in the first plunger 34, and the like can be controlled. In the latter example, the flow rate of the material can be specified based on the displacement of the piston of each plunger, and the same control as in the former example can be performed.

As illustrated in FIG. 3, the hot runner 26 is provided with a plurality of nozzles 42 for injecting the plasticized recycled material RC and the virgin material VM into the mold M installed in the mold mounting unit 28. In addition. inside the hot runner 26, a first sprue runner 44 and a second sprue runner 46 for allowing thermoplastic resin to flow are formed as separate and independent flow paths.

When the first distributor 60 and the second distributor 64 and the through holes 62a, 62b on one side of the third distributor 62 are connected, the recycled material RC and/or the virgin material VM extruded from the first plunger 34 flow to the first sprue runner 44. In addition, the recycled material RC and/or the virgin material VM extruded from the second plunger 40 flow to the second sprue runner 46.

In contrast, when the first distributor 60 and the second distributor 64 and the through holes 62c and 62d on the other side of the third distributor 62 are coupled, the recycled material RC and/or the virgin material VM extruded from the second plunger 40 flow to the first sprue runner 44. In addition, the recycled material RC and/or the virgin material VM extruded from the first plunger 34 flow to the second sprue runner 46.

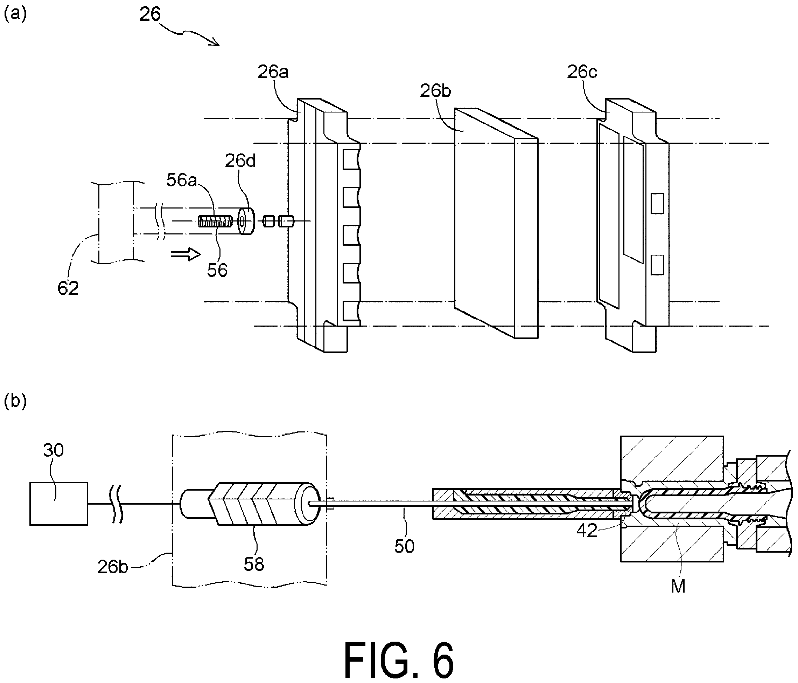

As illustrated in FIG. 6(a), the hot runner 26 is configured by overlapping a packing plate 26a and a manifold 26c, and is interiorly disposed with the first sprue runner 44 and the second sprue runner 46 (see FIG. 3 for both). Furthermore, a control plate 26b is sandwiched between the packing plate 26a and the manifold 26c.

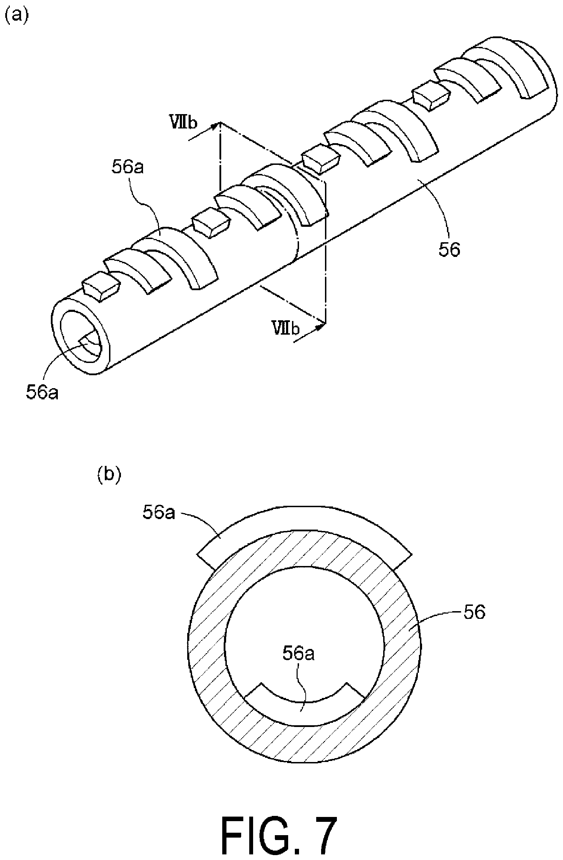

Inside the piping coupling the third distributor 62 and the hot runner 26, that is, the third distributor 62 and the first sprue runner 44 and the second sprue runner 46, a stationary mixer 56 formed in a cylindrical shape is arranged. The piping in which the stationary mixer 56 is arranged is coupled to the first sprue runner 44 and the second sprue runner 46 by way of a sprue bush 26d. As illustrated in FIG. 7, a plurality of protrusions 56a are formed along the axial direction of the stationary mixer 56 on the outer surface and the inner surface of the stationary mixer 56 formed in a cylindrical shape. The protrusions 56a are formed along the circumferential direction of the stationary mixer 56, and the lengths of the protrusions 56a adjacent to each other along the axial direction of the stationary mixer 56 are different. Here, three protrusions 56a having different circumferential lengths are repeatedly formed along the axial direction. The recycled material RC and the virgin material VM flowing through the piping are disturbed by the protrusions 56a of the stationary mixer 56. For this reason, in a case where the recycled material RC and the virgin material VM are mixed and flow through the piping, the recycled material RC and the virgin material VM are disturbed and are promoted to be mixed with each other. As a result, the material of the injection material when the recycled material RC and the virgin material VM are mixed and injection molded can be homogenized. Note that the shape of the protrusion 56a illustrated in the present embodiment is an example, and this is not the sole case, and protrusions having different shapes may be formed as long as they are molded to an extent the composite material can be disturbed.

As illustrated in FIG. 6(b), a servomotor 58 (an example of an adjustment device) for actuating, that is, sliding a stem 50, to be described later, is disposed inside the control plate 26b. The servomotor 58 is electrically connected to the control device 30.

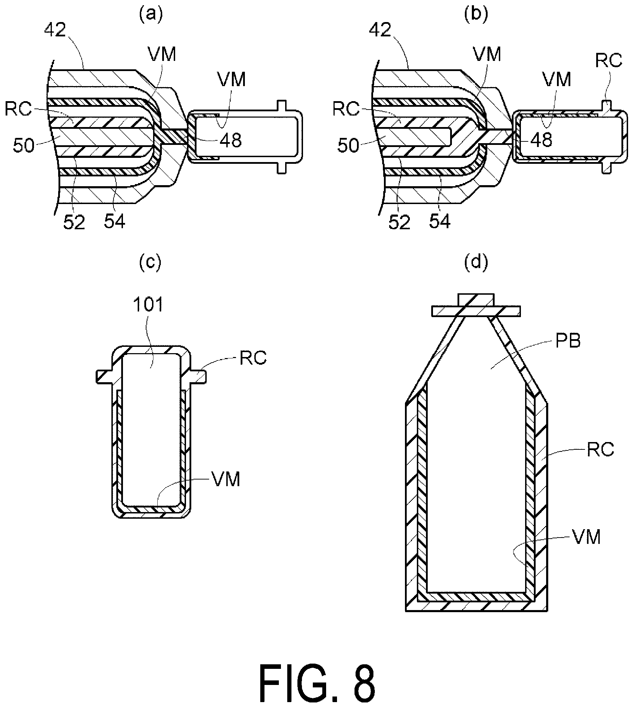

As shown in FIGS. 3 and 8(a), the nozzle 42 is formed in a bell shape whose outer peripheral shape is reduced in diameter toward the mold M, and an injection port 48 for injecting a material, that is, a resin is formed at a distal end portion facing the mold M. Furthermore, the center portion of the nozzle 42 is formed with a first injection path 52 along the axial direction thereof, and an end portion is connected to the injection port 48. In addition, on the radially outward side of the first injection path 52 is formed a second injection path 54 in the axial direction of the nozzle 42 and along the outer periphery of the first injection path 52, and the end portion is connected to the injection port 48. The first injection path 52 is connected with the first sprue runner 44 and the second injection path 54 is connected with the second sprue runner 46.

Inside the first injection path 52, a stem 50 made of metal and formed in a rod shape is disposed along the axial direction of the nozzle 42. The stem 50 is configured to be slidable along the axial direction of the nozzle 42 by a servomotor 58 (see FIG. 6(b)). Therefore, the control device 30 can control the sliding, that is, the movement amount of the stem 50 by controlling, that is, actuating, the servomotor 58. Thus, the first injection path 52 can be blocked or opened, and the amount of recycled material RC and/or virgin material VM to be injected from the first injection path 52 can be adjusted. Note that it is not necessary to provide the same number of servomotors 58 as the number of stems 50, and several stems 50 may be connected to one servomotor 58, and these stems 50 may be simultaneously moved by the servomotor 58.

### Method for Using Manufacturing System

Next, an injection method for molding a first preform 101 to a fifth preform 105 using the recycled material RC and the virgin material VM as the composite material through the manufacturing system 10 according to the present embodiment will be described.

### First Preform 101

Here, by adjusting, that is, sliding the third distributor 62, the first plunger 34 and the first sprue runner 44 are connected to each other, and the second plunger 40 and the second sprue runner 46 are connected to each other. First, as illustrated in FIG. 8(a), the first injection path 52 is blocked by sliding the stem 50 toward the injection port 48 side. In this state, the virgin material VM is pressurized by the second plunger 40 and injected from the second injection path 54 to the mold M (see FIG. 3). The injected virgin material VM first comes into contact with the inner side portion of the mold M, and this contact portion is cooled and solidified. Therefore, the subsequently injected virgin material VM flows along the inner side of the mold M starting from this portion.

Next, as illustrated in FIG. 8(b), the stem 50 is slid toward the hot runner 26, that is, toward the side away from the injection port 48 to open the first injection path 52. In this state, when the pressurization of the second plunger 40 is stopped and the recycled material RC is pressurized by the first plunger 34, only the recycled material RC is injected into the mold M from the first injection path 52. Therefore, as illustrated in FIG. 8(c), the first preform 101 in which the virgin material VM is disposed on the inner side and at the bottom portion can be configured. Furthermore, as illustrated in FIG. 8(d), the first preform 101 is expanded by stretch blow molding, whereby the plastic container PB in which the virgin material VM is disposed on the inner side and at the bottom portion can be molded. As a result, it is possible to manufacture the plastic container PB in which the recycled material RC and the virgin material VM are used in combination so that high quality can be secured, that is, the influence on the contents such as beverages to be injected into the container can be suppressed or prevented and the strength of the container can be secured.

### Second Preform 102

As illustrated in FIG. 3, the first plunger 34 is connected to the second plunger 40 by way of the first distributor 60 and the second distributor 64. Therefore, the virgin material VM on the second plunger 40 side can flow to the first plunger 34 side, and be mixed with the recycled material RC of the first plunger 34 thus creating the mixed material MX.

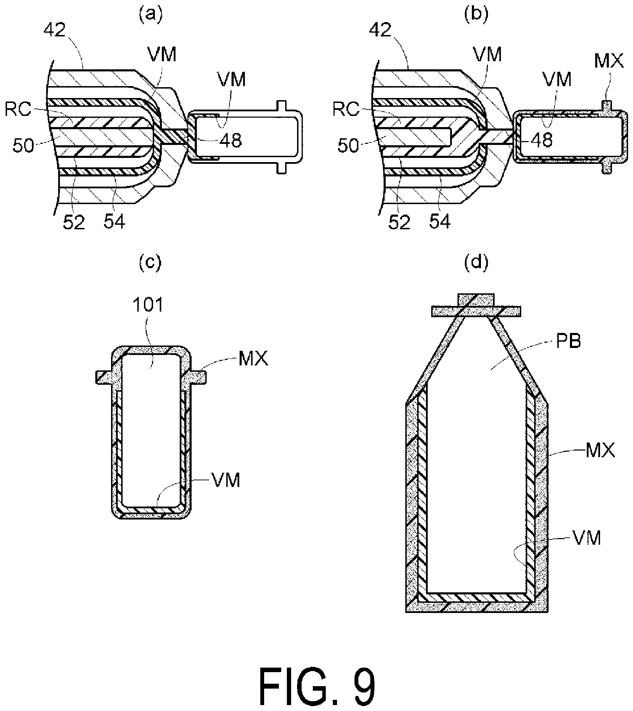

Here, by adjusting, that is, sliding the third distributor 62, the first plunger 34 and the first sprue runner 44 are connected to each other, and the second plunger 40 and the second sprue runner 46 are connected to each other. First, as illustrated in FIG. 9(a), the first injection path 52 is blocked by sliding the stem 50 toward the injection port 48 side. In this state, the virgin material VM created on the second plunger 40 side is pressurized and injected from the second injection path 54 to the mold M (see FIG. 3). The injected virgin material VM first comes into contact with the inner side portion of the mold M, and this contact portion is cooled and solidified. Therefore, the subsequently injected virgin material VM flows along the inner side of the mold M starting from this portion.

Next, as illustrated in FIG. 9(b), the stem 50 is slid toward the hot runner 26 to open the first injection path 52. In this state, when the pressurization of the second plunger 40 is stopped and the mixed material MX is pressurized by the first plunger 34, only the mixed material MX can be injected into the mold M from the first injection path 52. Therefore, as illustrated in FIG. 9(c), the second preform 102 in which the virgin material VM is disposed on the inner side and at the bottom portion can be configured. Furthermore, as illustrated in FIG. 9(d), the second preform 102 configured in such a manner is expanded by stretch blow molding, whereby the plastic container PB in which the virgin material VM is disposed on the inner side and at the bottom portion can be molded. As a result, it is possible to manufacture the plastic container PB in which the recycled material RC and the virgin material VM are used in combination so that high quality can be secured, that is, the influence on the contents such as beverages to be injected into the container can be suppressed or prevented and the strength of the container can be secured.

### Third Preform 103 and Fourth Preform 104

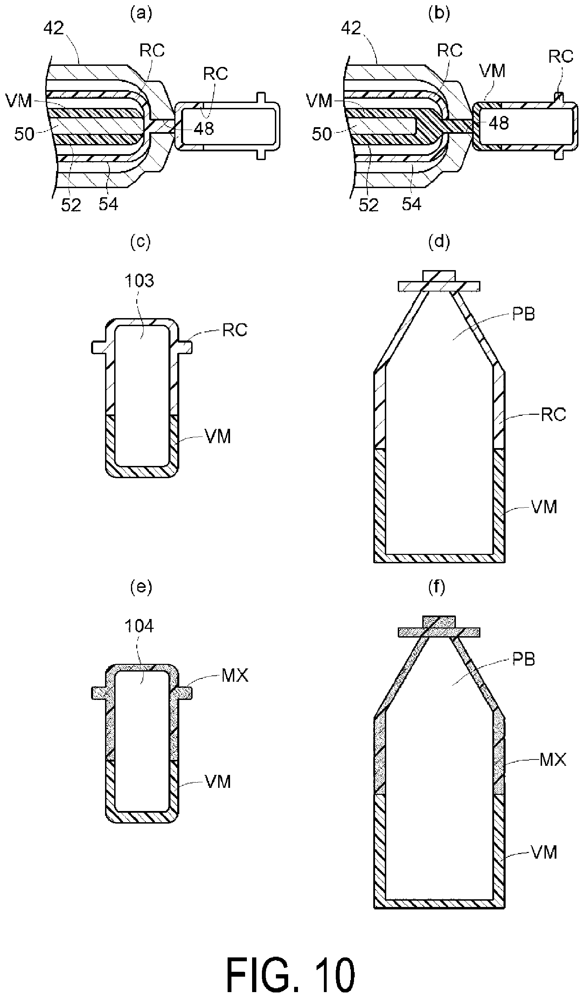

Here, by adjusting, that is, sliding the third distributor 62, the first plunger 34 and the second sprue runner 46 are connected to each other, and the second plunger 40 and the first sprue runner 44 are connected to each other. First, as illustrated in FIG. 10(a), the first injection path 52 is blocked by sliding the stem 50 toward the injection port 48 side. In this state, the recycled material RC on the first plunger 34 side is pressurized, and a large amount of the recycled material RC is injected from the second injection path 54 into the mold M (see FIG. 3). The large amount of the injected recycled material RC flows into the back of the mold M without being solidified even when coming into contact with the inner side portion of the mold M.

Next, as illustrated in FIG. 10(b), the stem 50 is slid toward the hot runner 26 to open the first injection path 52. In this state, when the pressurization of the first plunger 34 is stopped and the virgin material VM is pressurized by the second plunger 40, only the virgin material VM can be injected into the mold M from the first injection path 52. Therefore, as illustrated in FIG. 10(c), since the recycled material RC is swept away to the back of the mold M, the third preform 103 in which the virgin material VM is disposed at the bottom portion and the recycled material RC is disposed at the top portion can be configured. In addition, the fourth preform 104 in which the virgin material VM is disposed at the bottom portion and the mixed material MX is disposed at the top portion can be configured by creating the mixed material MX on the first plunger 34 side and injecting the mixed material MX into the mold M. Furthermore, as illustrated in FIGS. 10(d) and 10(f), the plastic container PB in which the virgin material VM is disposed at the bottom portion can be molded by expanding the third preform 103 and the fourth preform 104 by stretch blow molding. As a result, the plastic container PB using the recycled material RC and the virgin material VM in combination so as to ensure high quality can be manufactured.

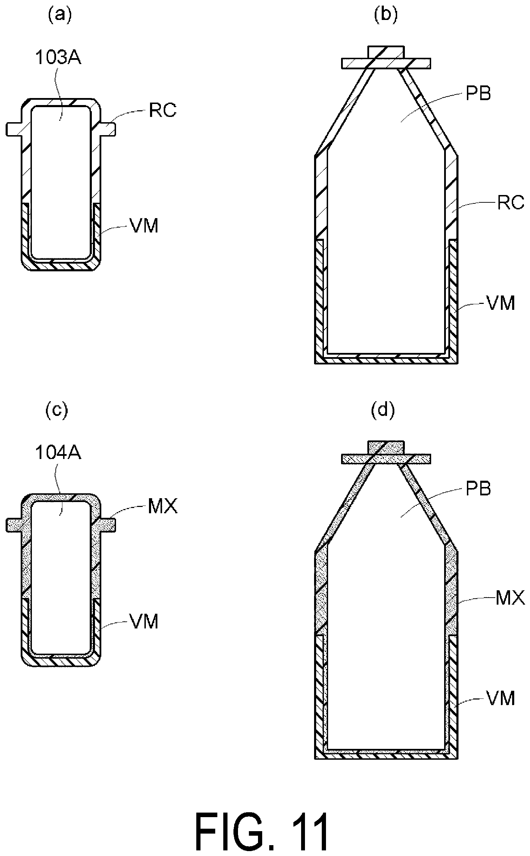

FIG. 11(a) illustrates a modified example 103A of the third preform 103. In the modified example 103A, a recycled material RC is disposed at the top portion, and a two-layer structure of the recycled material RC (inner side) and a virgin material VM (outer side) is formed at the bottom portion. In a plastic container PB (FIG. 11(b)) obtained by expanding the modified example 103A by stretch blow molding, the recycled material RC is disposed on the inner side of the bottom portion, and the virgin material VM is disposed on the outer side of the bottom portion. From the viewpoint of enhancing the strength of the bottom portion, in addition to the configuration in which the entire bottom portion is made of the virgin material VM as in the third preform 103, a configuration in which the bottom portion is partially made of the virgin material VM as in the modified example 103A can also be adopted. The same applies to a modified example 104A (FIG. 11(c)) of the fourth preform 104 and the plastic container PB (FIG. 11(d)) obtained therefrom.

### Fifth Preform 105

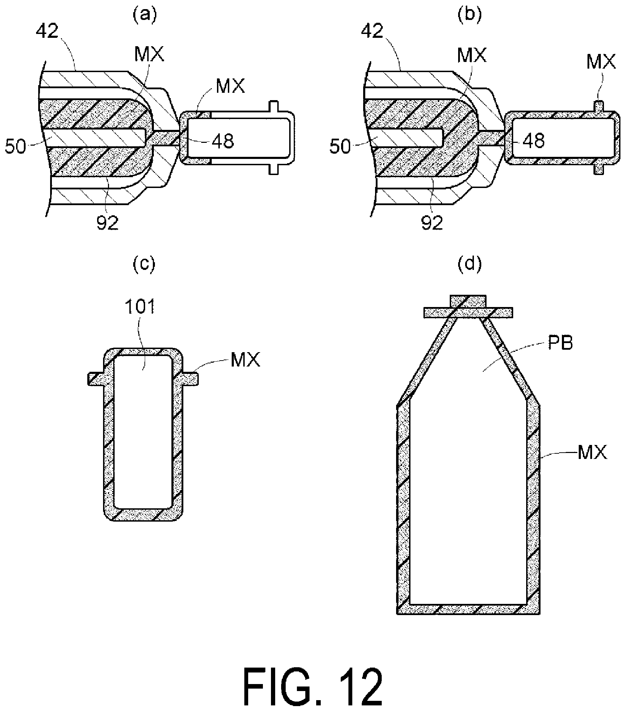

FIG. 12 illustrates an injection method using a single nozzle 90 as a nozzle with a single injection path. Only a first injection path 92 is formed in the single nozzle 90, where the first injection path 92 is connected with the first sprue runner 44 and/or the second sprue runner 46 and can inject the mixed material MX created on the first plunger 34 and/or the second plunger 40 side.

Therefore, as illustrated in FIGS. 12(a) to 12(c), the fifth preform 105 can be made of the mixed material MX in which the composition of the virgin material VM is adjusted according to the intended use. Furthermore, as illustrated in FIG. 12(d), the fifth preform 105 is expanded by stretch blow molding, whereby the plastic container PB in which the mixed material MX is disposed can be molded. As a result, the plastic container PB using the recycled material RC and the virgin material VM in combination so as to ensure high quality can be manufactured.

### Operation and Effect of Present Embodiment

Next, operations and effects of the manufacturing system 10 according to the first embodiment will be described below.

According to the manufacturing system 10 of the present embodiment, the first plasticizing device 32 for melting the recycled material RC, the second plasticizing device 38 for melting the virgin material VM, and the first plunger 34 and the second plunger 40 for pressurizing the recycled material RC and the virgin material VM melted therein are provided. In addition, there is provided a hot runner 26 including a first sprue runner 44 which is connected to the first plunger 34 and the second plunger 40 via piping and in which a flow path through which the recycled material RC and the virgin material VM pressurized by the first plunger and the second plunger are passed is formed; and a nozzle 42 which is connected to a mold M installed in the mold mounting unit 28 and which injects the recycled material RC and the virgin material VM flowing in from the first sprue runner 44 into the mold M. For this reason, materials having different physical properties such as the recycled material RC and the virgin material VM and thus having different heating times and heating temperatures required for melting can be individually melted. As a result, the high-quality plastic container PB can be manufactured while securing the quality of the recycled material RC and the virgin material VM.

In addition, according to the manufacturing system 10 of the present embodiment, the first distributor 60 and the second distributor 64 that allow or shield the recycled material RC and/or the virgin material VM flowing from the first plasticizing device 32 and the second plasticizing device 38 to pass therethrough are provided. Therefore, the amount of molten material extruded by the first plunger 34 and the second plunger 40 can be adjusted according to the site of the plastic container PB to be injection molded. As a result, the molten material can be used for different purposes according to the site of the plastic container PB, and the high-quality plastic container PB can be manufactured.

Furthermore, according to the manufacturing system 10 of the present embodiment, the recycled material RC can be used for at least one of the composite materials. Therefore, the high-quality plastic container PB can be manufactured by combining the recycled material RC and another material having different physical properties from the recycled material RC.

In addition, according to the manufacturing system 10 of the present embodiment, the third distributor 62 that is disposed between the first distributor 60 and the first sprue runner 44, that is connected to the second plasticizing device 38 and the second plunger 40 via piping, and that allows or shields the recycled material RC and the virgin material VM is provided. Thus, it is possible to adjust the amount of recycled material RC and virgin material VM flowing from the first distributor 60 to the first sprue runner 44 and the amount of recycled material RC and virgin material VM flowing from the second plunger 40 to the first sprue runner 44. The third distributor 62 is connected to the second sprue runner 46 of the hot runner 26 via piping. Thus, it is possible to adjust the amount of recycled material RC and virgin material VM flowing from the first distributor 60 to the second sprue runner 46 and the amount of recycled material RC and virgin material VM flowing from the second plunger 40 to the second sprue runner 46. Thus, different molten materials can be injected via the first sprue runner 44 and the second sprue runner 46, and the molten material can be used for different purposes according to the site of the plastic container PB, so that a high-quality plastic container PB can be manufactured.

Further, according to the manufacturing system 10 of the present embodiment, a cylindrical stationary mixer 56 that is arranged in the piping between the first sprue runner 44 and second sprue runner 46 and the third distributor 62, respectively, and in which the protrusion 56a is formed on the outer side portion is provided. Thus, the recycled material RC and the virgin material VM flowing via the third distributor 62 to the first sprue runner 44 and the second sprue runner 46 can be stirred by the protrusion 56a on the outer side of the stationary mixer 56. Therefore, the mixed material MX can flow to the first sprue runner 44 and the second sprue runner 46 in a homogeneous state. As a result, a high-quality plastic container PB can be manufactured.

In addition, according to the manufacturing system 10 of the present embodiment, the second distributor 64 that is connected to the second plasticizing device 38 and the second plunger 40 via a piping and that allows or shields the virgin material VM to pass toward the first distributor 60 or the third distributor 62. Therefore, the amount of molten material extruded by the second plunger 40 can be adjusted according to the site of the plastic container PB to be injection molded. As a result, the molten material can be used for different purposes according to the site of the plastic container PB, and the high-quality plastic container PB can be manufactured.

Furthermore, according to the manufacturing system 10 of the present embodiment, the hot runner 26 includes the stem 50 for opening and closing the nozzle 42, the servomotor 58 for actuating the nozzle 42, and the control plate 26b for arranging the servomotor 58. Thus, the amount of recycled material RC and virgin material VM to be injected via the first sprue runner 44 and the second sprue runner 46 can be adjusted by actuating the stem 50 to open and close the nozzle 42. As a result, since the recycled material RC and the virgin material VM can be used for different purposes according to the site of the plastic container PB, a high-quality plastic container PB can be manufactured.

In addition, according to the manufacturing system 10 of the present embodiment, the manufacturing system 10 includes the molding machine 14 and the decontamination machine 20 that decontaminates the recycled material RC. Therefore, a high-quality plastic container PB can be manufactured after decontaminating the recycled material RC to which the contaminants are attached.

As described above, the plastic container PB made of the composite material of the recycled material RC and the virgin material VM can be manufactured so that high quality can be secured by the manufacturing system 10 according to the present embodiment.

Note that although the first plunger 34 and the second plunger 40 are used as the plungers here, no such limitation is intended, and the plungers may be integrated into one, or three or more plungers may be used.

### Modified Example of Third Distributor

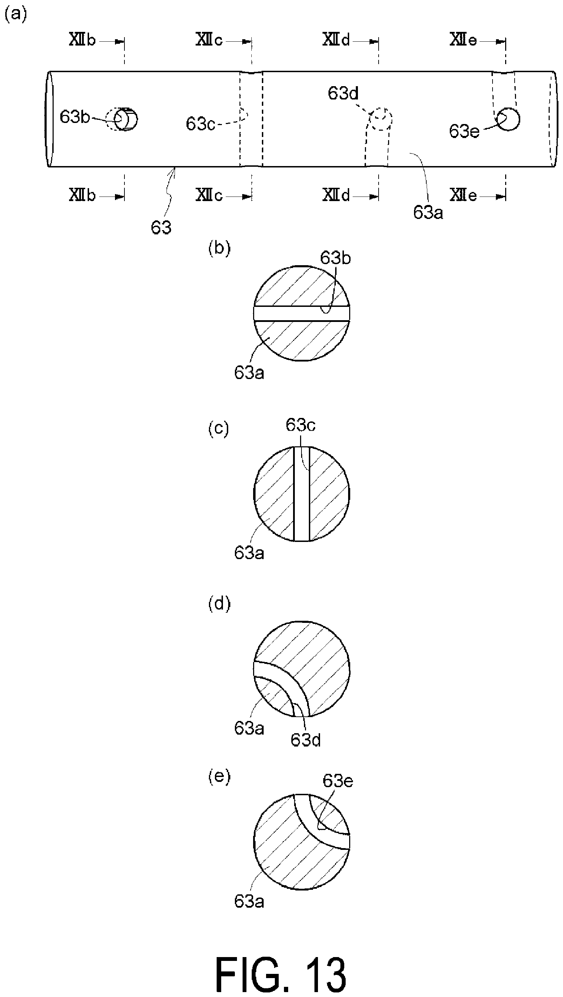

As illustrated in FIG. 13, in the third distributor 63 according to the present modified example, a first flow path 63b, a second flow path 63c, a third flow path 63d, and a fourth flow path 63e for circulating the recycled material RC and the virgin material VM are formed along the radial direction inside a main body 63a formed in a circular column shape. Furthermore, the third distributor 63 is slidable along its axial direction. The first flow path 63b and the second flow path 63c are formed in linear shapes orthogonal to each other when viewed along the axial direction of the main body 63a. For this reason, the recycled material RC and/or the virgin material VM can flow to one of the first sprue runner 44 and the second sprue runner 46 and can flow to the other of the first sprue runner 44 and the second sprue runner 46 by rotating the main body 63a 90 degrees about the axial direction. Furthermore, the third flow path 63d and the fourth flow path 63e are curved flow paths that do not pass through the axial center of the main body 63a to flow only one of the recycled material RC and the virgin material VM from the first plunger 34 or the second plunger 40 to the first sprue runner 44 or the second sprue runner 46.

The third distributor 63 may adjust the amount of recycled material RC and virgin material VM flowing from the first distributor 60 to the first sprue runner 44 and the amount of recycled material RC and virgin material VM flowing from the second plunger 40 to the first sprue runner 44. Furthermore, the third distributor 63 may adjust the amount of recycled material RC and virgin material VM flowing from the first distributor 60 to the second sprue runner 46 and the amount of recycled material RC and virgin material VM flowing from the second plunger 40 to the second sprue runner 46. Thus, different molten materials can be injected via the first sprue runner 44 and the second sprue runner 46, and the molten material can be used for different purposes according to the site of the plastic container PB, so that a high-quality plastic container PB can be manufactured.

### Modified Example of Stem Adjustment Device

In the above embodiment, an example in which the servomotor 58 is provided as the adjustment device for operating the stem 50 has been described. A modified example of such an adjustment device will be described below.

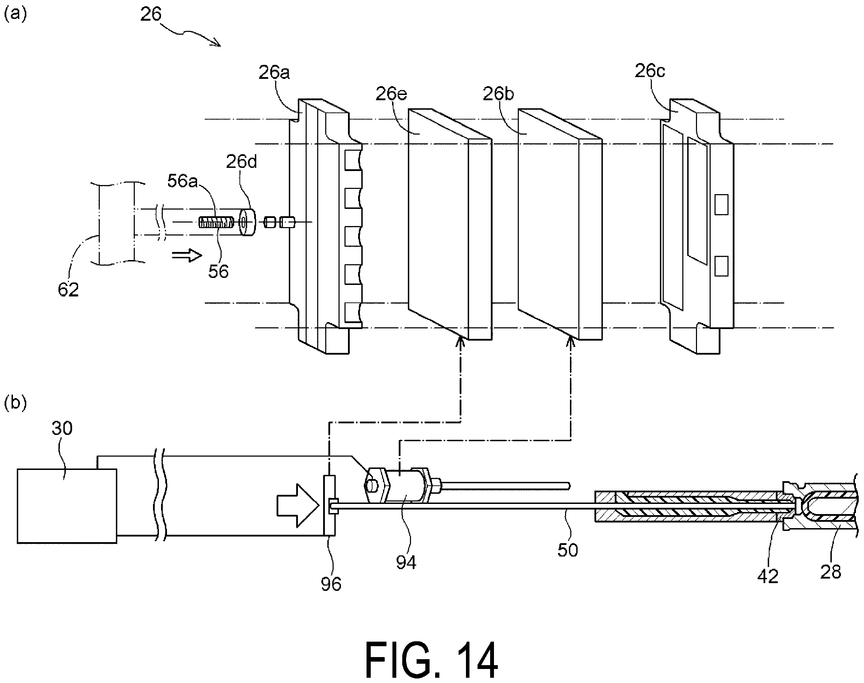

As illustrated in FIG. 14(a), a hot runner 26 according to the present modified example is configured by sandwiching a control plate 26b and an oil plate 26e between a packing plate 26a and a manifold 26c. As illustrated in FIG. 14(b), a magnetic displacement gauge 94 for detecting displacement of the stem 50 is disposed on the control plate 26b, and the oil plate 26e is configured to be able to actuate the drive mechanism 96 by hydraulic pressure in order to slide the stem 50. Furthermore, the magnetic displacement gauge 94 and the drive mechanism 96 are configured to interlock via the control device 30.

The hot runner 26 includes a magnetic displacement gauge 94 that detects displacement of the stem 50, and an oil plate 26e (an example of a hydraulic device) that is connected to the magnetic displacement gauge 94 and actuates the drive mechanism 96 by hydraulic pressure. Therefore, the opening and closing of the nozzle 42 is adjusted while confirming the displacement of the stem 50 detected by the magnetic displacement gauge 94, and as a result, the amount of recycled material RC and the virgin material VM to be injected via the first sprue runner 44 and the second sprue runner 46 can be adjusted. As a result, it is possible to use the molten material to be injected for different purposes according to the site of the plastic container PB, so that a high-quality plastic container PB can be manufactured.

### Another Embodiment

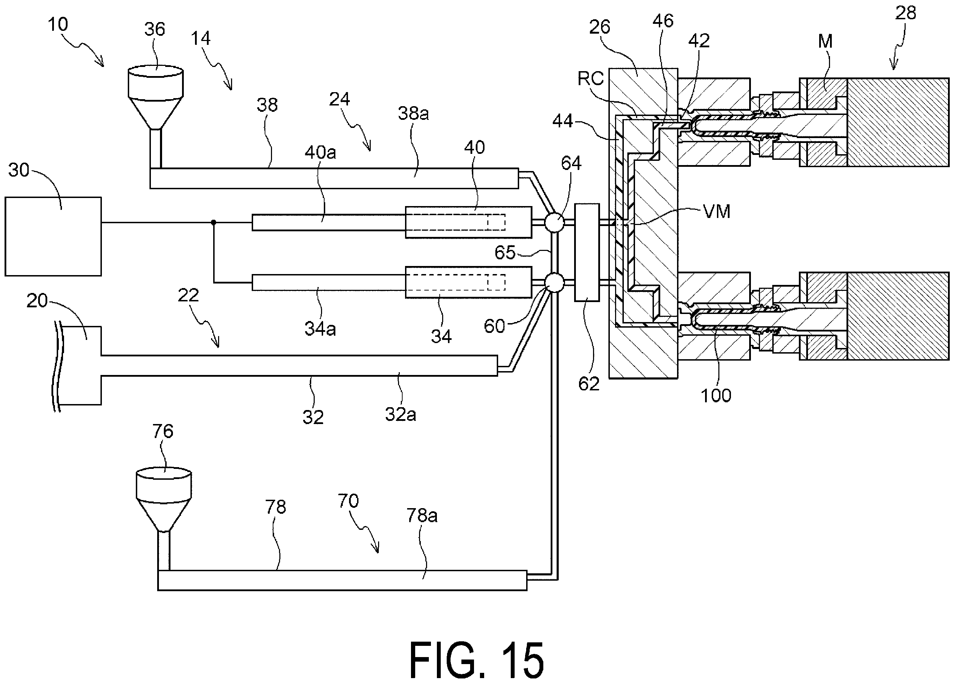

In another embodiment illustrated in FIG. 15, a third injection section 70 is added to the manufacturing system 10 according to the above-described embodiment. The third injection section 70 includes a hopper 76 into which the pellet-like mixed material MX is charged, and a third plasticizing device 78. The third plasticizing device 78 has a screw (not shown) extending in the longitudinal direction inside a housing 78a thereof, and is heated by a heater. The distal end portion of the third plasticizing device 78 is connected to the first plasticizing device 32 via a piping, and the mixed material MX can be supplied to the first plasticizing device 32. Thus, in the first plasticizing device 32, the recycled material RC supplied from the decontamination machine 20 and the mixed material MX supplied from the third plasticizing device 78 can be mixed.

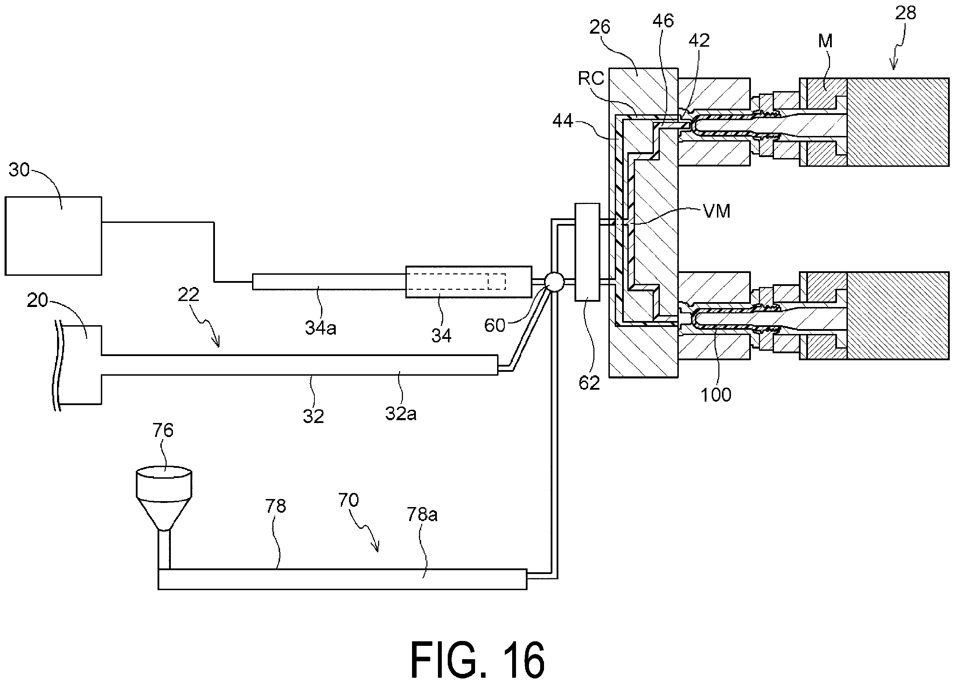

Another embodiment illustrated in FIG. 16 has a configuration in which the second injection section 24 is omitted from the other embodiment of FIG. 15. As described above, the injection molding device according to the present invention may be implemented by a configuration including the injection section (first injection section 22) including the first plasticizing device (first plasticizing device 32), the second plasticizing device (third plasticizing device 78), the plunger (first plunger 34), and the distributor (first distributor 60). In this case, as the posture of the first plunger 34, a posture in which the first plasticizing device and the plunger are in fluid communication, a posture in which the second plasticizing device and the plunger are in fluid communication, and a posture in which the plunger and the hot runner are in fluid communication may be selected. Thus, the two types of materials can be mixed at an arbitrary ratio in the plunger.

Also, with respect to other configurations, it should be understood that the embodiments described in the present specification are illustrative in all respects and that the scope of the present invention is not limited thereto. It will be easily understood by those skilled in the art that appropriate modifications can be made without departing from the spirit of the present invention. Accordingly, other embodiments modified without departing from the spirit of the present invention are naturally included in the scope of the present invention.

### Industrial Applicability

The present invention can be used, for example, for manufacturing a preform.

### Reference Signs List

10: Manufacturing system
12: Pre-treatment unit
14: Molding machine
16: Raw material pre-treatment unit
18: Extruder
20: Decontamination machine
22: First injection section
24: Second injection section
26: Hot runner
26a: Packing plate
26b: Control plate
26c: Manifold
26d: Sprue bush
26e: Oil plate
28: Mold mounting unit
30: Control device
32: First plasticizing device
32a: Housing
34: First plunger
34a: First piston
36: Hopper
38: Second plasticizing device
38a: Housing
40: Second plunger
40a: Second piston
42: Nozzle
44: First sprue runner
46: Second sprue runner
48: Injection port
50: Stem
52: First injection path
54: Second injection path
56: Stationary mixer
56a: Protrusion
58: Servomotor
60: First distributor
60a: Main body
60b: First flow path
60c: Second flow path
60d: Third flow path
62: Third distributor
62a: Through hole
62b: Through hole
62c: Through hole
62d: Through hole
63: Third distributor
63a: Main body
63b: First flow path
63c: Second flow path
63d: Third flow path
63e: Fourth flow path
64: Second distributor
65: Piping
70: Third injection section
76: Hopper
78: Third plasticizing device
78a: Housing
90: Single nozzle
92: First injection path
94: Magnetic displacement gauge
96: Drive mechanism
M: Mold
100: Preform
100a: Mouth portion
100b: Cylindrical body portion
100c: Bottom portion
101: First preform
102: Second preform
103: Third preform
104: Fourth preform
105: Fifth preform
MX: Mixed material
RC: Recycled material
VM: Virgin material
PB: Plastic container

## Claims

1. An injection molding device comprising:
a first injection section including a first plasticizing device, a first plunger, and a first distributor connected to the first plasticizing device and the first plunger;
a second injection section including a second plasticizing device, a second plunger, and a second distributor connected to the second plasticizing device and the second plunger;
a mold mounting unit; and
a hot runner in fluid communication with the first injection section and the second injection section; wherein
a posture in which the first plasticizing device and the first plunger are in fluid communication and a posture in which the first plunger and the hot runner are in fluid communication are selectable as a posture of the first distributor;
a posture in which the second plasticizing device and the second plunger are in fluid communication and a posture in which the second plunger and the hot runner are in fluid communication are selectable as a posture of the second distributor;
the hot runner includes a first sprue runner, a second sprue runner, and a nozzle; and
the nozzle is provided in fluid communication with the first sprue runner and the second sprue runner, and in fluid communication with a mold mounted on the mold mounting unit.

2. The injection molding device according to claim 1, wherein
the first distributor and the second distributor are connected to each other, and
a posture in which the first plunger is in fluid communication with at least one of the second plasticizing device and the second plunger is selectable as the postures of the first distributor and the second distributor.

3. The injection molding device according to claim 1, further comprising a control device configured to control operations of the first plunger and the second plunger.

4. The injection molding device according to claim 3, further comprising:
a first flow meter provided in a flow path between the first distributor and the hot runner; and
a second flow meter provided in a flow path between the second distributor and the hot runner, wherein
the control device is configured to control operations of the first plunger and the second plunger in accordance with an instruction value of the first flow meter and an instruction value of the second flow meter.

5. The injection molding device according to claim 3, further comprising:
a first displacement gauge configured to detect displacement of a piston of the first plunger; and
a second displacement gauge configured to detect displacement of a piston of the second plunger, wherein
the control device is configured to control operations of the first plunger and the second plunger in accordance with an instruction value of the first displacement gauge and an instruction value of the second displacement gauge.

6. The injection molding device according to any one of claims 1 to 5, wherein the hot runner includes a stem configured to open and close the nozzle, and an adjustment device configured to adjust a position of the stem.

7. The injection molding device according to claim 6, wherein the adjustment device includes a servomotor and is configured to adjust the position of the stem in accordance with a rotational speed of the servomotor.

8. The injection molding device according to claim 6, wherein
the adjustment device includes a magnetic displacement gauge and a hydraulic device configured to move the stem, and
the hydraulic device is controlled in accordance with an instruction value of the magnetic displacement gauge.

9. The injection molding device according to claim 1, further comprising:
a third distributor provided between the hot runner and each of the first injection section and the second injection section, wherein
as a posture of the third distributor, a posture in which the first injection section and the first sprue runner are in fluid communication and the second injection section and the second sprue runner are in fluid communication, and a posture in which the first injection section and the second sprue runner are in fluid communication, and the second injection section and the first sprue runner are in fluid communication are selectable.

10. The injection molding device according to claim 1, further comprising a stationary mixer provided in a flow path between the first plunger and the hot runner.

11. The injection molding device according to claim 1, further comprising:
a third plasticizing device, wherein
a posture in which the third plasticizing device and the first plunger are in fluid communication is further selectable as the posture of the first distributor.

12. The injection molding device according to claim 1, further comprising a raw material supply unit configured to supply a resin in a molten state to the first plasticizing device.

13. The injection molding device according to claim 12, wherein the raw material supply unit includes an extruder configured to melt and extrude a recycled material, and a decontamination machine configured to remove a foreign matter contained in the recycled material.

14. The injection molding device according to claim 13, wherein a flake-like recycled material is usable as the recycled material.

15. An injection molding device comprising:
an injection section including a first plasticizing device, a second plasticizing device, a plunger, and a distributor;
a mold mounting unit; and
a hot runner in fluid communication with the injection section, wherein
a posture in which the first plasticizing device and the plunger are in fluid communication, a posture in which the second plasticizing device and the plunger are in fluid communication, and a posture in which the plunger and the hot runner are in fluid communication are selectable as a posture of the distributor;
the hot runner includes a first sprue runner, a second sprue runner, and a nozzle, and
the nozzle is provided in fluid communication with the first sprue runner and the second sprue runner, and in fluid communication with a mold mounted on the mold mounting unit.
